# EUROPEAN PATENT SPECIFICATION

(11) **EP 1 401 155 B1**
(45) Date of publication and mention of the grant of the patent: **11.11.2009**
(21) Application number: 03020000.0
(22) Date of filing: 03.09.2003
(51) Int. Cl.: H04L 12/413, H04L 12/12

(54) **Method and system for wakeup packet detection at gigabit speeds**
Verfahren und Vorrichtung zur Detektion von Gigabit-Geschwindigkeit-Erwachungs-Paketen
Méthode et système pour la détection de paquets de réveil à vitesse Gigabit

(30) Priority: 04.09.2002 US 408498 P; 29.01.2003 US 353440
(43) Date of publication of application: 24.03.2004
(73) Proprietor: Broadcom Corporation, Irvine, CA 92617 (US)
(72) Inventor: Liu, Chun-I, San Jose, California 95131 (US); Lee, Jonathan, Dublin, California (US)
(74) Representative: Jehle, Volker Armin

(56) References cited:
- US-A- 5 938 771
- US-A- 6 085 328
- US-A- 6 101 608
- US-B1- 6 311 276

## Description

### BACKGROUND OF THE INVENTION

Embodiments of the present application relate generally to networking hardware, and more particularly to a system and method for detecting network wakeup events upon receiving specific network frames in high speed networking applications.

As the demand for higher data rates and bandwidth requirements continues to increase, various technologies facilitating transmission rates of the order of about 10 Gigabits and higher are being developed for high-speed network applications. High-speed digital communication networks over copper and optical fiber are typically used in many network communication and digital storage applications. Ethernet and Fiber Channel, for example, are two widely used communication protocols which continue to evolve in response to an ever increasing need for higher bandwidth in digital communication systems. Accordingly, there is a need to develop various 10 Gigabit networking devices that may facilitate, for example, high-speed serial data applications. The IEEE P802.3ae draft 5 specifications describes the physical layer requirements for 10 Gigabit Ethernet applications.

The Open Systems Interconnection (OSI) model (ISO standard) was developed to establish standardization for linking heterogeneous computer and communication systems. It describes the flow of information from a software application of a first computer system to a software application of a second computer system through a network medium. The OSI model has seven distinct functional layers including Layer 7: an application layer; Layer 6: a presentation layer; Layer 5: a session layer; Layer 4: a transport layer; Layer 3: a network layer; Layer 2: a data link layer; and Layer 1: a physical layer. Importantly, each OSI layer describes certain tasks which are necessary for facilitating the transfer of information through interfacing layers and ultimately through the network. Notwithstanding, the OSI model does not describe any particular implementation of the various layers.

OSI layers 1 to 4 generally handle network control and data transmission and reception. Layers 5 to 7 may be adapted to handle various application issues. Specific functions of each layer may vary depending on factors such as protocol and interface requirements or specifications that are necessary for implementation of a particular layer. For example, the Ethernet protocol may provide collision detection and carrier sensing in the data link layer. Layer 1, the physical layer, is responsible for handling all electrical, optical, opto-electrical and mechanical requirements for interfacing to the communication media. Notably, the physical layer may facilitate the transfer of electrical signals representing an information bitstream. The physical layer may also provide services such as, encoding, decoding, synchronization, clock data recovery, and transmission and reception of bit streams. In high bandwidth applications having transmission speeds of the order of Gigabits, high-speed electrical, optical and/or electro-optical transceivers may be used to implement this layer.

The proliferation of physical layer devices designed to meet the needs of high speed communication applications will, without a doubt, give rise to new challenges. One challenge pertains to the development of high speed communications devices having optimized power consumption. In this regard, various attempts have been made to provide standardized power management procedures for various network devices and/or applications. For example, the network driver interface specification (NDIS) defines a standardized network application programming interface (API) for network interface cards (NICs). In this regard, the NDIS provides a medium access control (MAC) driver that encapsulates or wraps the complexity and details of a network interface card and provides a common application programming interface for accessing various functions of a network interface card. For example, NDIS provides a standardized API that may be used to access Ethernet-based network interface cards.

NDIS also provides a suite or library of functions, which may be adapted as tools that may be used to access the functionality of a network interface card. The suite or library of functions provided by the NDIS may be utilized by various upper level protocol drivers, thereby reducing the complexity of these upper level drivers. For example, a MAC layer driver or even transmission control protocol/internet protocol (TCP/IP) driver may utilize one or more functions of NDIS suite or library of functions.

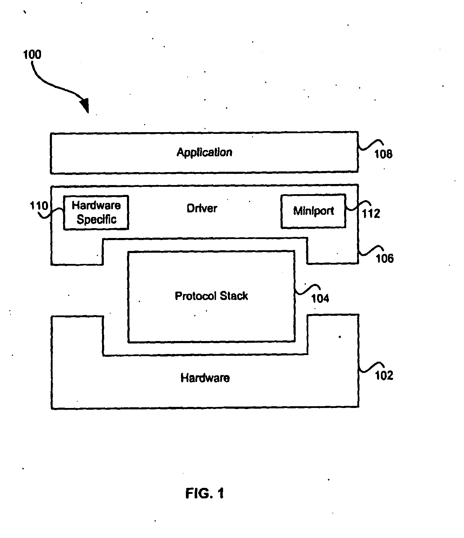

FIG. 1 is a high-level block diagram of an exemplary NDIS architecture 100. Referring to FIG. 1, there is shown a hardware block 102, a protocol stack 104, a driver block 106, and an application block 108.

The hardware block 102 may include the necessary hardware that may be utilized for communicating over a transport medium. Accordingly, the hardware block 102 may include, for example, various integrated circuits and suitable logic that may be adapted to transmit and/or receive signals from a transport medium.

The protocol stack block 104 may be adapted to provide a layered architecture that defines particular functionality and services offered by each layer in the architecture. Specifically, the protocol stack block 104 may be consistent with the layered architecture of the OSI.

The driver block 106 may include a hardware specific driver block 110 and/or a miniport driver block 112. In general, the hardware specific driver block 110 may be adapted to provide platform or hardware specific functionality. In this regard, the use of the hardware specific driver block 110 by non-native applications may be limited and in some instances, some non-native applications may not have the capability to interface with the hardware specific driver block 110. The latter may be particularly true in instances where the hardware specific driver block 110 is proprietary. In general, the miniport driver block 112 may be adapted to provide platform independent functionality such as wrapper functions. In this regard, the miniport driver block 112 may conform to certain standards and may be adapted to provide universal functions, which may be utilized by both native and non-native applications.

The application block 108 may include one or more software applications and/or functions that may be adapted to handle the communication of data received and/or transmitted by the hardware block 102. Applications in the application block 108 may be adapted to utilize the standardized wrapper functions provided by the miniport driver block 112 and/or the proprietary drivers provided by the hardware specific driver block 110. Applications in the application block 108 may utilize various functions provided by either of the hardware specific driver block 110 or the miniport driver block 112 to handle connections, process messages received by the hardware block 102 and messages to be transmitted by the hardware block 102.

For power management purposes, a network controller, such as an Ethernet medium access control (MAC) device, may be required to generate a power management event upon the receipt of certain network events. Those events may include, but not are not limited to, network status changes, a management request, receipt of a network wakeup frame and receipt of a magic packet. In general, a wakeup frame may be any specified frame, also called an interested frame, that may be used to wakeup a system.

Particularly, a network wakeup event may be a hardware or software generated request, which may be used to initiate a change in power state of a system or system component or entity. For example, a network wakeup event may be utilized for changing the state of a system and/or device from a lowered powered state to a fully powered state, or vice versa. In general, network wakeup events may be generated external to a network. Exemplary network wakeup frames may include address resolution protocol (ARP) broadcast frames, directed uni-cast frames and NetBIOS broadcast frames.

In some networking applications, depending on the network vendor, some software and/or hardware applications may require the use of a network device capable of recognizing wakeup frames based on pattern matches that may occur anywhere in the first 128 bytes of the frame. Such an implementation may add excessive cost to the hardware required for the network interface controller and/or card (NIC), since additional memory and/or buffers may be required. Furthermore, since additional software programming is required to control the functionality of the network interface card, the programming overhead may further increase the cost associated with the network interface card. Moreover, in Gigabit Ethernet (GbE) wire-speed applications, these associated costs can obviously be prohibitively high.

Accordingly, a need exists for an efficient and flexible solution that may be utilized for recognizing those frames which may be used for a particular event, such as a network power management event, and which may occur at Gigabit data rates. Furthermore, due to the rapid growth in networking technology, a flexible solution is required that will not only meet current power management requirements, but will also be expandable so that it will be applicable to more advanced future networking applications.

Further limitations and disadvantages of conventional and traditional approaches will become apparent to one of skill in the art, through comparison of such systems with the present invention as set forth in the remainder of the present application with reference to the drawings.

US-A-6 101 608 pertains to a method and apparatus for secure remote wakeup of a networked computer according to the preamble of claims 1, and 13, respectively.

It is an object of the present invention to increase the flexibility of a pattern matching process for wakeup packet detection.

This object is achieved by the method of claim 1, the computer program product of claim 7, and the system of claim 13. Preferred embodiments of the present invention are determined in the dependent claims.

Aspects of the present invention provide a method and system for wakeup packet detection at gigabit speeds. A method for wakeup packet detection for high speed networking may include storing at least one data pattern in memory and matching at least a portion of an incoming frame to at least a portion of the at least one data pattern stored in memory upon instantaneous receipt the incoming frame. In this regard, instantaneous matching occurs without buffering or storing the any portion of an incoming frame. At least one power management event may be generated if the matching results in at least a portion of the incoming frame matching at least a portion of the at least one data pattern stored in memory.

The matching may further include the step of enabling a control word which may be used to indicate at least one byte in the incoming frame to inspect. An offset to a location of the at least one data pattern in memory may be determined. At least a portion of the data pattern located at the offset may be compared to at least one byte indicated by the control word. The generating step may further include notifying at least one processor of at least one generated power management event. The notifying step may further include the step of generating an interrupt signal to at least a host processor in order to notify the host processor of the power management event.

The storing step may further include adaptively storing at least one data pattern in memory during the wakeup detection. The storing step may also include the step of pre-storing at least one data pattern in the memory prior to the wakeup detection. The method for wakeup packet detection for high speed networking may also include disabling the matching of at least a portion of the incoming frame to at least a portion of the at least one data pattern stored in memory in order to maintain an existing power state. The disabling may be executed by a host processor and/or a core processor.

Another aspect of the invention may also include a machine readable storage, having stored thereon a computer program having at least one code section for implementing a method for wakeup packet detection for high speed networking. The at least one code section may be executable by a machine for causing the machine to perform the steps described above.

Another aspect of the invention may also include a system for wakeup packet detection for high speed networking. The system may include a memory for storing at least one data pattern and at least one matcher adapted to match at least a portion of an incoming frame to at least a portion of at least one data pattern stored in memory upon instantaneous receipt of an incoming frame. Accordingly, no buffering or storage of the incoming data frames in the incoming data steam is done. At least one generator may be adapted to generate at least one power management event if the matching step results in at least a portion of the incoming frame matching at least a portion of the at least one data pattern stored in memory.

The at least one matcher may be adapted to utilize at least one control word for indicating at least one byte in the incoming frame to inspect. The at least one matcher may be adapted to determine an offset to a location of the at least one data pattern in memory. A comparator may be adapted to compare at least a portion of the data pattern at the offset to the at least one byte indicated by the control word. The at least one generator may include at least one notifier adapted to notify at least one processor of at least one generated power management event. The at least one generator may be adapted to further generate an interrupt signal to at least a host processor. The memory may be configured to adaptively store at least one data pattern during wakeup detection phase. The memory may be pre-configured to pre-store at least one data pattern prior to the wakeup detection.

The system may further include at least one disabler adapted to disable the matching of at least a portion of the incoming frame to at least a portion of the at least one data pattern stored in memory in order to maintain an existing power state. The disabler may be a host processor or a core processor.

These and other advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1 is a high-level block diagram of an exemplary NDIS architecture.
FIG. 2 is an exemplary power management state transition diagram.
FIG. 3 is a block diagram of an exemplary system for detecting network wakeup events upon receiving specific network frames in high speed networking applications in accordance with an embodiment of the invention.
FIG. 4 is a block diagram illustrating an exemplary shared memory arrangement that may be utilized for pattern matching in accordance with an embodiment of the invention.
FIG. 5 is a flow chart for an exemplary setup sequence for the pattern preparation and WOL configuration in accordance with one embodiment of the invention.

### DETAILED DESCRIPTION OF THE INVENTION

Aspects of the invention provide one or more flexible and cost-efficient solutions that may parse particular frames of interest and accordingly generate one or more power management events while a host system or device such as a computer is in a specified power state, for example, a lower or higher power state. In an embodiment of the invention, interested frames may be received and matched against one or more patterns stored in a memory block, without the need for providing memory for storing and/or buffering data frames in a received data stream.

Depending on which power management standard or specification is utilized, one or more of several defined power management states may be utilized. In some instances, the power management states applicable to certain devices may be class dependent. A device bus class may be used to categorize various devices dependent on a bus type to which they may be attached. For example, a device bus class may exist for a small computer system interface (SCSI) devices, peripheral component interconnect (PCI) devices, Institute of Electrical and Electronics Engineers (IEEE) 1394 also called firewire devices, industry standard architecture (ISA) devices and universal serial bus (USB) devices. Notwithstanding, some of the common power management states may include, but are not limited to, D0, D1, D2, and D3. Certain power management states may be designated as mandatory states while others may be designated as optional power management states. The designation of optional and/or mandatory power management states may be implementation dependent. For example, in some systems, D0 and D3 are mandatory power management states and must be supported, while D1 and D2 are optional power management states which do not have to be supported.

Power management state D0 may indicate that a device is powered up and already operational. A device that may be in the D0 state may be utilizing full power and providing full functionality to a user.

Power management state D1 may indicate a low power state which may or may not result in loss of a device context. Power management state D1 may be a class specific state. In general, a bus handler or controller may be helpless in preventing devices connected to a bus which may be in power management state D1 from losing their context. In certain applications, no bus transmissions, no receptions and no interrupts may be permitted while a bus is operating in the D1 power management state.

Power management state D2 may also be a class specific state. Power management state D2 may also be a low power state, which may achieve greater power consumption than power management state D1. However, devices coupled to a bus in power management state D2 may lose their contexts under certain conditions. For example, in a case where there is a reduction in power to a bus ending in power management state D2, then some devices connected to the bus may lose some of their context. Accordingly, devices operating in power management state D2 may be configured to continue to operate in the D2 or higher power management state. In certain applications, no bus transmissions, no receptions and no interrupts may be permitted while a bus is operating in the D2 power management state.

Power management state D3 may indicate that a device is off and not operational. In the D3 power management state, all power to a particular device may be lost and the device context may be assumed to be lost. Accordingly, a device driver may be adapted to restore a device's context upon a transition to a D0 state. In certain instances, depending on the application, the D3 power management state may be a default power management state. In cases where wakeup or wake-on-LAN (WOL) may be implemented, states other than the D3 power management state may be the default power management state. In the D1 power management state, no bus transmissions, no receptions and no interrupts may be permitted.

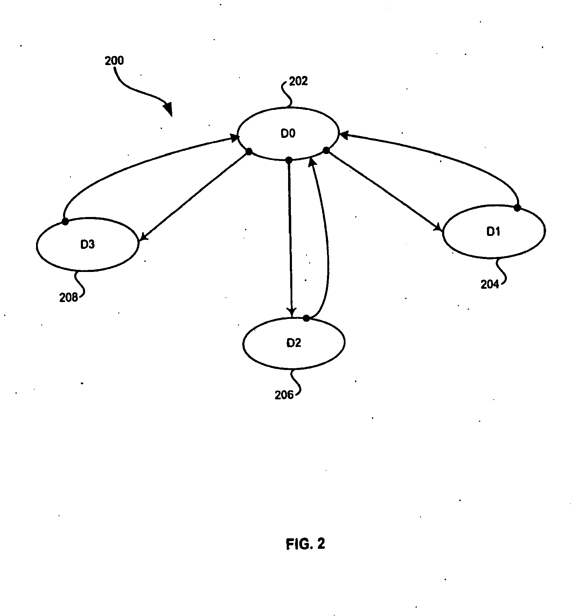

FIG. 2 is an exemplary power management state transition diagram 100. Referring to FIG. 2, there is shown various power management states D0, D1, D2, D3 referenced as 202, 204, 206, 208 respectively. If the present power management state is D0, then transitions may occur to any one of power management states D1, D2, and D3. A transition from D0 to any of power management states D1, D2, or D3 may occur when a system enters a sleep mode of operation. In a case where wake may be enabled, the lowest power state from which system wake may be supported may be any one of power management states D1, D2, and D3. In a case where a link may be designated as down, for example after a specified timeout period, then power management state D1, D2, or D3 may be the lowest state in which a device may be able to detect an uplink condition.

A transition from power management state D0 to power management state D3, may be indicative of a network shutdown initiated by the system. Additionally, a transition from power management state D0 to power management state D3, may indicate that the system may have entered sleep mode and wake may not be enabled. Alternatively, the device may be configured to wake from power management state D3. A transition from any one of power management states D1, D2, D3 may be indicative of a wakeup which may be caused by, for example, a wakeup event.

In general, a device driver may be adapted to continuously determine the states of both a bus and any device or devices that may be coupled to the bus. In a case where a device driver receives a power management wakeup event (PWE), the device driver may be adapted to determine what power management state transitions may be permissible. In general, a power management state of a bus may not be lower that the highest state of a device currently connected to the bus. Notwithstanding, a power management wakeup event may accordingly affect this general rule. Assume for example, that a device is in a D2 power management state and configured to wakeup a system using a power management wakeup event. Assume further that a bus to which the device may be coupled can only communicate wakeup events while operating in the D1 state. Although, the bus is in a lower power management state, namely D1, than the power management state of the device, namely D2, the bus may not transition power management states and may remain in the D1 power management state in order to transfer the power management wakeup event.

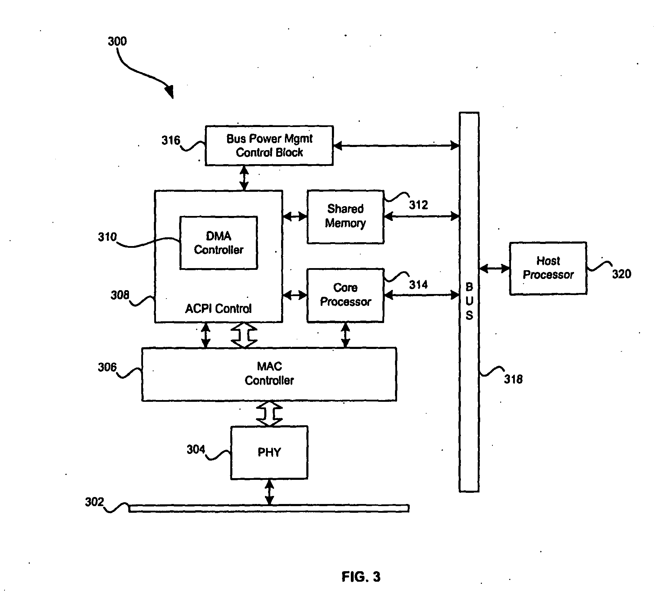

FIG. 3 is a block diagram of an exemplary system 300 for detecting network wakeup events upon receiving specific network frames in high speed networking applications in accordance with an embodiment of the invention. Referring to FIG. 3, there is shown a transport medium 302, a physical layer device (PHY) 304, a MAC controller 306, an advanced configuration and power interface (ACPI) control block 308, a shared memory block 312, a core processor 314, a bus power management block 316, a bus 318, and a host processor 320. The ACPI control block 308 may include, for example a DMA controller 310, and other functional component blocks.

It should be recognized that the arrangement of the various components of the exemplary system 300 may be altered. For example, although the DMA controller is illustrated with the ACPI control block 308, the invention is not limited in this regard and the DMA controller 310 may be external to the ACPI control block 308. Similarly, the core processor 314 may be integrated with the ACPI control block 308 and the bus power management control block 316 into a single package such as a SoC or application specific integrated circuit (ASIC). The physical layer device (PHY) 304, MAC controller 306, advanced configuration and power interface (ACPI) control block 308, a shared memory block 312, core processor 314, and bus power management block 316, may be integrated on a single circuit card. Accordingly, the single circuit card may be plugged in the bus 318 which may be part of a host system such as a workstation or personal computer (PC). The host processor 320 may function as a central processing unit for the host and may be adapted to execute one or more applications and/or and operating system. In one aspect of the invention, the single circuit card may be a network interface card, although the invention is not so limited.

The transport medium 302 may be an optical medium, electrical medium or a combination thereof. Transport media for communicating data at rates of the order of Gigabits are well known.

The PHY 304 may be single-chip multimode multi-sublayer PHY device which may be utilized for high speed communication at rates of the order of Gigabits. Aspects of a single-chip multimode multi-sublayer PHY device applicable to communication at rates of the order of Gigabits may be found in U.S. Patent Application Serial No. 60/402,090 entitled "System and Method for Implementing a Single-Chip Multiple Sub-layer PHY" filed on 8/7/2002 and U.S. Patent Application Serial No. 10/282,849 (Attorney Docket No. 13914US02) entitled "System and Method For Data Transition Control in a Multi-Rate Communication System Single-chip Multimode Multi-sublayer PHY device " filed October 29, 2002. The PHY device 304 may be adapted to recover a synchronous clock from an incoming data stream. In this manner, the power consumption may be significantly reduced. Additionally, if there is no incoming datastream, the network interface card and/or some of its component blocks may function in, for example, a D3 power state to minimize power consumption.

The MAC controller 306 may be adapted to handle MAC layer functions. The MAC layer functions handled by the MAC controller 306 may be part of the data link layer, layer 2, functions. In this regard, MAC controller 306 may be configured to implement, for example, the well-known IEEE 802.3ae Gigabit Ethernet protocol. Since each layer in the OSI model may provide a service to the immediately higher interfacing layer, the MAC controller 306 may provide the necessary services to, for example, a computer system of which the host processor 320 may be a part. The MAC controller 306 may also be adapted to ensure that packets are suitably formatted and communicated to the ACPI control block 308 and the core processor 314. Further details of the operations of a MAC controller applicable to high speed communication at rates of the order of Gigabits may be found in the aforementioned U.S. Patent Application Serial No. 10/282,849 (Attorney Docket No. 13914US02) entitled "System and Method For Data Transition Control in a Multi-Rate Communication System Single-chip Multimode Multi-Sublayer PHY device " filed October 29, 2002

The ACPI control block 308 may be adapted to conform with the advanced configuration and power interface (ACPI) specification. The ACPI block 308 may be coupled to the MAC controller 306, the core processor 314, the shared memory 312 and the bus power management and control block 316. The ACPI specification describes the operations of a typical ACPI control block. The ACPI control block 308 may contain suitable logic and/or circuitry that may be adapted to perform comparison or matching of the incoming data frames in the incoming datastream to data patterns stored in the shared memory block 312. For example, the ACPI control block 308 may contain one or more comparators and discrete logic that may be configured to perform the comparison or pattern matching. In one aspect of the invention, the ACPI control block 308 may be implemented as a finite state machine (FSM), although the invention is not so limited.

The DMA Controller 310 may be any suitable direct memory access processor or controller that may be adapted to control read and write processes to the shared memory 312.

The shared memory block 312 may be any dual port random access memory (DPRAM). The shared memory block may include one or more high speed memory devices that may be capable of handling the processing of data at Gigabit speeds. The shared memory block 312 may be memory mapped to facilitate access by one or more devices.

The core processor 314 may be any of a general class of microcontrollers or microprocessors and may be a standalone processor device or an embedded processor device such as a system-on-chip processor (SoC). One or more functions or applications may be executed by the core processor 314. For example, these functions or applications may be adapted to control the processing of data frames in an incoming datastream and may also control the operations of the ACPI control block 308.

The bus 318 may be any suitable bus, for example, a PCI, USB, ISA, CardBus, Firewire or SCSI. The bus 318 may be adapted to provide interconnectivity for a plurality of devices coupled thereto. Accordingly, an arbitration and/or prioritization scheme may be provided to grant access to the bus by the various devices coupled to the bus. For example, an interrupt driven scheme may be utilized to grant bus access and/or provide inter-device communication.

The host processor 320 may be coupled to the bus 318. The host processor 320 may be any of a class of general or special purpose microprocessor or microcontroller that may adapted to communicate with one or more devices that may be coupled to the bus 318. One or more applications or functions may be executed by the host processor 320. An operating system may be executed by the host processor 320. Additionally, one or more software applications may be adapted to receive and process power management events such as wake-on-LAN events for a particular device coupled to the bus 318, or for the host system. The host processor may be memory mapped to facilitate access to the shared memory block 312.

The bus power management block 316 may be coupled to the ACPI block 308 and may be adapted to generate various wake-on-LAN events to one or more device coupled to the bus 318. The bus power management block 316 may include suitable logic and/or circuitry that may be configured to generate these wake-on-LAN events. For example, the bus power management block 316 may contain interrupt logic that may be adapted to generate interrupt signals to the core processor 320 upon generation of, for example, a power management event.

In one aspect of the invention, a flexible and cost-efficient solution may be provided for parsing interested frames received from a transport medium. Upon receipt of certain interested frames, one or more power management events may be generated. The generated event may be adapted to direct a device to function in a particular power state or mode. Particularly, the ACPI control block 308 may be adapted to generate one or more power management events while a host system or device such as a computer, is in a higher or lower power state, for example.

In operation, a data stream containing a plurality of data frames may be received from the transport medium 302 by the PHY device 304. The received data frames may be processed by the MAC controller 306 and passed to one or more appropriate applications, functions and/or drivers for processing. Accordingly, the ACPI control block 308 may be adapted to receive the frames for processing. During processing of the data frames, the ACPI control block 308 may examine at least a portion of the received data frames, by for example, one of various packet filtering processes. During filtering of the received data frames, the frames in the incoming data stream may be compared against at least one data pattern, which may be stored in at least a portion of the shared memory block 312.

Although it may be known to utilize exact pattern matching or signature matching to match the data in the frames of the incoming data stream to the one or more of the data patterns stored in the shared memory block 312, exact matching and/or signature matching methods may not be particularly suitable for transmission speeds of the order of Gigabits data speeds. One reason is that huge amounts of memory and/or buffers would be required to accommodate the high transmission rates. Accordingly, the invention provides an efficient method for matching the data in the frames of the incoming data stream to one or more of the data patterns stored in the shared memory block 312, without the need to provide memory or buffers for storing data frames from an incoming data stream.

In one embodiment of the invention, the shared memory block 312 may be dynamically configured during operation to store one or more data patterns of interest. In this regard, the shared memory block 312 may be configured by at least one software application being executed by the host processor 320. Alternatively, the core processor 314 may be adapted to configure the shared data patterns of interest in the shared memory block 312. In another aspect of the invention, the shared memory block 312 may be pre-configured to contain one or more of a plurality of interested data patterns. In this regard, the core processor 314 and/or the host processor 320 may be adapted to pre-configure the shared memory block 312.

In accordance with one aspect of the invention, the ACPI control block 308 may be adapted to execute the pattern matching process while operating at the wire-speed. Wire-speed or wire-rate may be used to refer to an incoming data rate or speed. This may eliminate a need to store partial incoming data frames in any additional memory. Accordingly, any pattern matching storage element may be shared with other functional memory elements that may not be in use in D0 cold state. This may eliminate the use of separate register and/or memory arrays which may be required to program and store interested patterns, thereby reducing the overall system cost and power consumption.

In operation, the ACPI 308 may be adapted to initiate the data pattern matching process by starting from a pre-programmable offset to the base of the shared memory block 312 and parsing the incoming data frame byte-by-byte. The data patterns stored in the shared memory block 312 may be enabled and/or disabled at any byte boundary. The data pattern may be adapted to start at any arbitrary frame offset which may permit maximized flexibility in supporting future protocol enhancements, while utilizing the same hardware architecture. In accordance with the invention, during the data pattern matching process, either the end of the incoming data stream or the end of the data frames may signify the completion of the data pattern matching process. A power management event (PME) may be asserted whenever there is a pattern match. The power management event may be communicated to the host processor 320 by the bus power management control block 316. The host processor 320 may initiate a wakeup or transition to an appropriate power state.

In order to support the filtering of incoming data frames to detect interested frames at Gigabit speeds, tremendous pattern memory bandwidth may be required since there may be no temporary registers for storing and/or buffering data in the incoming data frames. In accordance with the inventive arrangements, the ACPI controller block 308 may be capable of comparing or matching data in the data frames of the incoming datastream against, for example, five user-defined patterns, as defined by the NDIS specification, at wire speed up to the first 128 bytes. The instant invention provides a system capable of storing one or more data pattern information, executing frame filtering and data pattern matching, and generating power management events such as wake-on-LAN (WOL) events Gigabit wire-speed.

In order to determine memory bandwidth requirements, the following calculation may be used to illustrate that more than 6.75 Gbps of memory bandwidth may be required to sustain, for example, a wire-speed of about 1 Gbps of Ethernet traffic. Assume an incoming wire-rate of 8 bits at 125 MHz. This results in a data rate equivalent to 1 Gbps. The required memory bandwidth, using one control bit and 6 data patterns is (8 bits + 1 control bit) * 6 data patterns * 125 MHz, which is equivalent to 6.75 Gbps. Assuming further an internal memory system running at one-half of the wire-speed or 62.5 MHz, then the required memory width may be larger than 108 bits. However, to maintain good memory partition, a 128-bit memory bank may be selected to provide an effective memory bandwidth of about 8 Gbps. Accordingly, since the shared memory block 312 may be utilized by other functional blocks, the overall system costs may be significantly reduced and the amount of power consumed may simultaneously be significantly reduced. Although the ACPI specification may specify up to five different patterns and 128 bytes for frame matching and comparison, one embodiment of the present invention provides 6 patterns, thereby making it flexible enough for future expansion. Notwithstanding, the actual limitation may be dependent on the physical memory size available instead of any control logic.

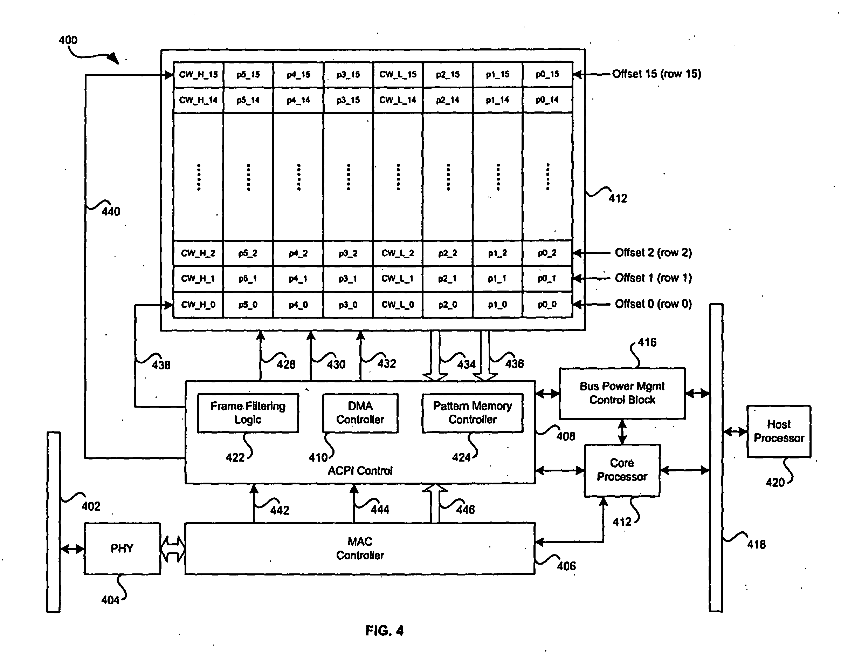

FIG. 4 is a block diagram 400 illustrating an exemplary shared memory arrangement that may be utilized for pattern matching in accordance with an embodiment of the invention. Referring to FIG. 4, there is shown a transport medium 402, PHY device 404, MAC controller 406, ACPI control block 408, DMA controller 410, shared memory block 412, bus power management control block 416, core processor 412, bus 418, host processor 420 and various signal lines. Although the shared memory block 412 is shown filled with data pattern information, various memory sizes may be utilized for implementing the shared memory 412. Accordingly, in certain instances, only a portion of the shared memory may be utilized for storing data patterns.

In accordance with one aspect of the invention, the shared memory block 412 may be configured to store the data patterns as follows. For exemplary purposes, the shared memory 412 is illustrated with 16 row, each of which is 128-bits wide. Accordingly, the shared memory block 312 may be implemented by at least a 16 X 128 memory module or any variants thereof. Each row in the 128-bits wide shared memory 412 may be partitioned into eight (8) 16-bit wide segments or columns. A first segment at offset zero (0), namely row zero (0), may contain a first 16-bit control word CW_H_0, which may be used to control three successive bit patterns, namely p5_0, p4_0, p3_0 in row zero (0).

A fifth segment at offset zero (0), namely row zero (0), may contain a second 16-bit control word CW_L_0, which may be used to control three successive bit patterns, namely p2_0, p1_0, p0_0 in row zero (0). A first segment at offset one (1), namely row one (1), may contain a first 16-bit control word CW_H_1, which may be used to control three successive bit patterns, namely p5_1, p4_1, p3_1 in row one (1). A fifth segment at offset one (1), namely row one (1), may contain a second 16-bit control word CW_L_1, which may be used to control three successive bit patterns, namely p2_1, p1_1, p0_1 in row one (1).

Similarly, a first segment at offset two (2), namely row two (2), may contain a first 16-bit control word CW_H_2, which may be used to control three successive bit patterns, namely p5_2, p4_2, p3_2 in row two (2). A fifth segment at offset two (2), namely row two (2), may contain a second 16-bit control word CW_L_2, which may be used to control three successive bit patterns, namely p2_2, p1_2, p0_2 in row two (2). The shared memory block 412 or a portion thereof may be filled in a similar manner with the control words followed by the corresponding bit patterns. Finally, a first segment at offset fifteen (15), namely row fifteen (15), may contain a first 16-bit control word CW_H_15, which may be used to control three successive bit patterns, namely p5_15, p4_15, p3_15 in row fifteen (15). A fifth segment at offset fifteen (15), namely row fifteen (15), may contain a second 16-bit control word CW_L_15, which may be used to control three successive bit patterns, namely p2_15, p1_15, p0_15 in row fifteen (15). Each control word in the shared memory block 412 may contain a byte mask that may be adapted to specify appropriate bits which are to be examined in the incoming data frames.

In accordance with one embodiment of the invention, before the host processor 320 enters into, for example, a low power mode, a suitable host application software may be adapted to pre-load a pattern into, for example, a designated memory location of the shared memory 412. The designated memory location of the shared memory 412 may be based on, for example, an ACPI base address register (ABAR). The host processor 318 may also program, for example, an ACPI data offset/length register (ADOR) accordingly. For a cold wake on LAN, for example, without the presence of bus power, the core processor 414 may be adapted to be capable of programming an interested data pattern into the shared memory 412. Once the ACPI control block 308 is enabled, for example, upon receipt of data frames from an incoming data stream, frame filtering logic block 422 in the ACPI control block 412 may be adapted to fetch, for example, all six data patterns from the shared memory block 412 on every RDCLK cycle. The RDCLK cycle may be 2.5 MHz, 25 MHz or 62.5 MHz, for example. The ACPI control block 408 may be adapted to concurrently compare or match data in the incoming 8-bit frames against the data patterns fetched from the shared memory 412.

In accordance with one embodiment of the invention, in a 10/100 Mbps mode of operation, three (3) data patterns may be fetched on every RDCLK cycle. Frame filtering logic 422 in the ACPI control block 408 may adapted to function as a memory read client, and may supply address/read control signals and commands directly to for example, a pattern memory controller 424 in the ACPI control block 408. Frame filtering logic 422 in the ACPI control block 408 may also contain suitable logic and/or circuitry that may be required for pattern address management.

In a Gigabit mode, the pattern memory controller 424 in the ACPI control block 408 may not need to latch incoming frame data into temporary holding registers, assuming that the shared memory block 412 may be fast enough to keep up with wire-rate on every clock cycle. In a case where there is an incoming data frame that matches one of the data patterns stored in the shared memory block 412, the frame filtering logic in the frame filtering block 422 of the ACPI control block 408 may generate a power management event that may be communicated to the bus power management block 416. The bus power management block 416 may be adapted to generate, for example, a final power management event signal on the bus 418, based on a host configuration. In one embodiment of the invention, the final power management event signal communicated to the host processor 418 may be interrupt driven.

In an embodiment of the invention, various registers and/or memory mapped locations may be provided to facilitate storage of data patterns in the shared memory 412 and for frame comparison or matching. For example, an ACPI pattern pointer register may be used to specify an offset into the shared memory block 412. The ACPI pattern pointer register may be a 32-bit register although the invention is not so limited. In a 32-bit arrangement, bit 31:13 may be reserved for future use, while bits 12:0 may be used to specify an offset into the physical memory of the shared memory block 412. The ACPI pattern pointer register may be utilized during frame comparison. In one aspect of the invention, bits 3:0 of the ACPI pattern pointer register may be ignored since doing so may result in alignment of the memory addresses of the shared memory block 412 to a natural 128-bit boundary. The ACPI pattern pointer register may have a default value of, for example, 0x00000000, although the invention is not limited in this regard. Accordingly, this may be dependent on a memory mapped I/O scheme utilized. A pattern length of the shared memory block or a region of the shared memory block 412 containing the data pattern may be indicated by 440. Similarly, a memory starting offset of the shared memory block 412 may be indicated by 438.

The ACPI pattern configuration register may be a 32-bit register although the invention is not so limited. In a 32-bit arrangement, bit 31:28 may be reserved for future use, while bits 27:16 may be used to specify an offset into the physical memory of the shared memory block 412 of a frame where a data patterns comparison starts. Bits 15:0 may be used to specify a number of valid double words for frame comparison.

Various control and data lines may couple the shared memory block 412 to the ACPI control block 408. These may include, but are not limited to, a read clock (RDCLK) line 428, a read command (RD_CMD) line 430, a memory address line (432), a control word line 434 and a data pattern line 436. Similarly, various control and data lines may couple the ACPI control block 408 to the MAC controller 408. These may include, but are not limited to, a data control word line 442, a data stream offset line 446 and an incoming data stream line 448.

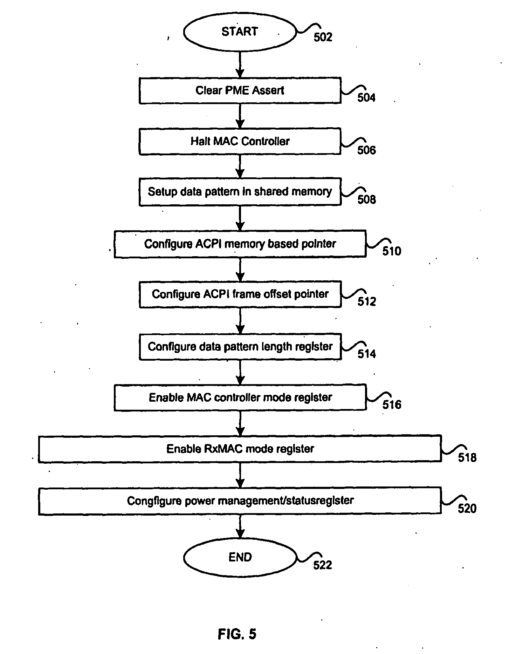

FIG. 5 is a flow chart 500 for an exemplary setup sequence for the pattern preparation and WOL configuration in accordance with one embodiment of the invention. The exemplary setup sequence illustrated in flowchart 500 may be implemented as part of a power management policy of a operating system. In this regard, the operating system may be part of the host system and may be executed by the host processor 420. Referring to FIG. 5, the setup sequence may start at step 502. In step 504, a power management event (PME) assert signal may be cleared or initialized. In step 506, the MAC controller may be halted. In step 508, one or more data patterns may be setup or loaded into the shared memory. In step 510, the ACPI memory based pointer may be configured. In step 512, the ACPI frame offset pointer may be configured. In step 514, the data pattern length register may be configured.

In step 516, a MAC controller mode register may be enabled to initialize the MAC controller. In step 518, a RxMAC mode register may be enabled. Accordingly, the RxMAC mode register may be adapted to place the MAC controller in promiscuous mode and additionally enable the ACPI control block 408. In step 520, a bus power management register may be configured. The bus power management register may be used to configure the bus power management control block 416 (FIG. 4). Accordingly, if a match is found, the power management control block 416 may generate a power management event such as a wake-on-LAN event to the host processor 420.

It should be recognized that the invention is not limited to the precise setup sequence as illustrated in FIG. 5. Other steps may be added or some of the steps of flowchart 500 may be eliminated. For example, subsequent to step 518, in order to further reduce power, a clock for the core processor 412 (FIG. 4) may be disabled. In another example, step 508 may have been previously done, particularly in a case where at least a portion of the shared memory block 412 may have been preconfigured with one or more data patterns. In step 508, the setup of data patterns in the shared memory 412 may be accomplished by the core processor 412 or the host processor 420.

In one embodiment of the invention, since the network interface card power may be independent of the bus power, if power on the bus 418 is lost, then the network interface card may be adapted to respond to a power management event. In this regard the PHY device 404 may be adapted to recover a synchronous clock signal from an incoming datastream. Accordingly, the ACPI control block 408 may be adapted to compare data frames in the incoming datastream to at least one data pattern configured in the shared memory block 412. If power is subsequently restored to the bus 418, then the power management and control block 416 may generate a power management event to the host processor 420. The host processor 420 may be adapted to have one or more drivers and or applications that may be adapted to respond to at least one power management event generated by the power management and control block 416.

In light of the foregoing, the present invention may be realized in hardware, software, or a combination of hardware and software. The present invention may be realized in a centralized fashion in one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention also may be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

Notwithstanding, the invention and its inventive arrangements disclosed herein may be embodied in other forms. Accordingly, reference should be made to the following claims, rather than to the foregoing specification, as indicating the scope of the invention. In this regard, the description above is intended by way of example only and is not intended to limit the present invention in any way, except as set forth in the following claims.

## Claims

1. A method for wakeup packet detection for networking at transmission rates of the order of Gigabit data rates or higher; the method comprising:
storing at least one data pattern in memory (312, 412);
matching at least a portion of said at least one data pattern stored in memory (312, 412) to at least a portion of an incoming frame concurrently upon receipt of said incoming frame; and
generating at least one power management event if said matching result in said at least a portion of said incoming frame matching said at least a portion of said at least one data pattern stored in memory (312, 412); **characterized in that** said matching further comprises:
enabling a control word, said control word indicating at least one byte in said incoming frame to inspect,
determining an offset to a location of said at least one data pattern in memory (312, 412); and
comparing at least a portion of said data pattern at said offset to said at least one byte indicated by said control word.

2. The method according to claim 1, wherein said generating further comprises notifying at least one processor (412) of said at least one generated power management event.

3. The method according to claim 2, wherein said notifying further comprises generating an interrupt signal to at least a host processor (320).

4. The method according to claim 1, wherein said storing further comprises pre-storing said at least one data pattern in said memory (312, 412) prior to the wakeup detection.

5. The method according to claim 1, further comprising disabling said matching of at least a portion of said incoming frame to at least a portion of said at least one data pattern stored in memory (312, 412) in order to maintain an existing power state.

6. The method according to claim 5, wherein said disabling is executed by at least one of a host processor (320) and a core processor (314).

7. A machine readable storage, having stored thereon a computer program having at least one code section for implementing a method for wakeup packet detection for networking at transmission rates of the order of Gigabit data rates or higher, the at least one code section executable by a machine for causing the machine to perform the steps comprising:
storing at least one pattern in memory (312, 412);
matching at least a portion of an incoming frame to at least a portion of said at least one data pattern stored in memory upon instantaneous receipt of said incoming frame; and
generating at least one power management event if said matching results in said at least a portion of said incoming frame matching said at least a portion of said at least one data pattern stored in memory,
**characterized in that** said at least one code for matching further comprises:
enabling a control word, said control word indicating at least one byte in said incoming frame to inspect;
determining an offset to a location of said at least one data pattern in memory; arid
comparing at least a portion of said data pattern at said offset to said at least one byte indicated by said control word.

8. The machine readable storage according to claim 7, wherein said at least one code section for generating further comprises code for notifying at least one processor (412) of said at least one generated power management event.

9. The machine readable storage according to claim 8, wherein said code for notifying further comprises code for generating an interrupt signal to at least a host processor (320).

10. The machine readable storage according to claim 7, wherein said at least one code section for storing further comprises code for pre-storing said at least one data pattern in said memory (312, 412) prior to the wakeup detection.

11. The machine readable storage according to claim 7, further comprising code disabling said matching of at least a portion of said incoming frame to at least a portion of said at least one data pattern stored in memory (312, 412) in order to maintain an existing power state.

12. The machine readable storage according to claim 11, wherein said code for disabling is executed by at least one of a host processor (320) and a core processor (314).

13. A system for wakeup packet detection for networking at transmission rates of the order of Gigabit data rates or higher the system comprising:
memory (312, 412) for storing at least one data pattern;
at least one matcher adapted to match at least a portion of an incoming frame to at least a portion of said at least one data pattern stored in memory upon instantaneous receipt of said incoming frame; and
at least one generator adapted to generate at least one power management event if said matching results in said at least a portion of said incoming frame matching said at least a portion of said at least one data pattern stored in memory,
**characterized in that** said at least one matcher further comprises:
an enabler for enabling a control word, said control word indicating at least one byte in said incoming frame to inspect;
an offset determinator for determining an offset to a location of said at least one data pattern in memory; and
at least one comparator for comparing at least a portion of said data pattern at said offset to said at least one byte indicated by said control word.

14. The system according to claim 13, wherein said at least one generator further comprises at least one notifier adapted to notify at least one processor (412) of at least one generated power management event.

15. The system according to claim 14, wherein said at least one notifier further comprises said at least one generator adapted to generate an interrupt signal to at least a host processor (320).

16. The system according to claim 13, wherein said memory is pre-configured to pre-store said at least one data pattern in said memory (312, 412) prior to the wakeup detection.

17. The system according to claim 13, further comprising at least one disabler for disabling said matching of at least a portion of said incoming frame to at least a portion of said at least one data pattern store in memory (312, 412) in order to maintain an existing power state.

18. The system according to claim 17, wherein said disabler is at least one of a host processor (320) and a core processor (314).

## Patentansprüche

1. Verfahren zur Ermittlung von Weckpaketen zum Vernetzen bei Übertragungsraten in der Größenordnung von Gigabit Datenraten oder höher,
wobei das Verfahren umfasst:
Speichern wenigstens eines Datenmusters in einem Speicher (312, 412); Angleichen wenigstens eines Teils des wenigstens einen in dem Speicher (312, 412) gespeicherten Datenmusters an wenigstens einen Teil eines ankommenden Frames gleichzeitig mit dem Empfang des ankommenden Frames; und
Erzeugen wenigstens eines Power Management Ereignisses, wenn das Angleichen dazu führt, dass wenigstens ein Teil des ankommenden Frames dem wenigstens einen Teil des wenigstens einen Datenmusters entspricht, das in dem Speicher (312, 412) gespeichert ist;
**dadurch gekennzeichnet, dass** das Angleichen des Weiteren umfasst:
Aktivieren eines Steuerungsworts, wobei das Steuerungswort wenigstens ein Byte in dem zu prüfenden ankommenden Frame angibt;
Ermitteln eines Offset zu einer Stelle des wenigstens einen Datenmusters in dem Speicher (312, 412); und
Vergleichen wenigstens eines Teils des Datenmusters an dem Offset mit dem wenigstens einen Byte, das durch das Steuerungswort angegeben wird.

2. Verfahren nach Anspruch 1, wobei das Erzeugen des Weiteren das Benachrichtigen wenigstens eines Prozessors (412) über das wenigstens eine erzeugte Power Management Ereignis umfasst.

3. Verfahren nach Anspruch 2, wobei das Benachrichtigen des Weiteren das Erzeugen eines Unterbrechungssignals für wenigstens einen Host Prozessor (320) umfasst.

4. Verfahren nach Anspruch 1, wobei das Speichern des Weiteren das Vorspeichern des wenigstens einen Datenmusters in dem Speicher (312, 412) vor der Weckermittlung umfasst.

5. Verfahren nach Anspruch 1, das des Weiteren das Deaktivieren des Angleichens wenigstens eines Teils des ankommenden Frames an wenigstens einen Teil des wenigstens einen in dem Speicher (312, 412) gespeicherten Datenmusters umfasst, um einen bestehenden Energiezustand aufrecht zu erhalten.

6. Verfahren nach Anspruch 5, wobei das Deaktivieren durch wenigstens einen eines Host Prozessors (320) und eines Kernprozessors (314) durchgeführt wird.

7. Maschinenlesbarer Speicher, auf dem ein Computerprogramm gespeichert ist, das wenigstens einen Codeabschnitt aufweist zum Implementieren eines Verfahrens zur Ermittlung von Weckpaketen zum Vernetzen bei Übertragungsraten in der Größenordnung von Gigabit Datenraten oder höher, wobei der wenigstens eine Codeabschnitt von einer Maschine ausgeführt werden kann, um zu veranlassen, dass die Maschine die folgenden Schritte durchführt:
Speichern wenigstens eines Musters in einem Speicher (312, 412); Angleichen wenigstens eines Teils eines ankommenden Frames an wenigstens einen Teil des wenigstens einen in dem Speicher gespeicherten Datenmusters gleichzeitig mit dem Empfang des ankommenden Frames; und
Erzeugen wenigstens eines Power Management Ereignisses, wenn das Angleichen dazu führt, dass der wenigstens eine Teil des ankommenden Frames dem wenigstens einen Teil des wenigstens einen Datenmusters entspricht, das in dem Speicher gespeichert ist;
wobei der wenigstens eine Code zum Angleichen des Weiteren aufweist:
Aktivieren eines Steuerungsworts, wobei das Steuerungswort wenigstens ein Byte in dem zu prüfenden ankommenden Frame angibt;
Ermitteln eines Offset zu einer Stelle des wenigstens einen Datenmusters in dem Speicher; und
Vergleichen wenigstens eines Teils des Datenmusters an dem Offset mit dem wenigstens einen Byte, das durch das Steuerungswort angegeben wird.

8. Maschinenlesbarer Speicher nach Anspruch 7, wobei der wenigstens eine Codeabschnitt zum Erzeugen des Weiteren einen Code zum Benachrichtigen wenigstens eines Prozessors (412) über das wenigstens eine erzeugte Power Management Ereignis aufweist.

9. Maschinenlesbarer Speicher nach Anspruch 8, wobei der Code zum Benachrichtigen des Weiteren einen Code zum Erzeugen eines Unterbrechungssignals für wenigstens einen Host Prozessor (320) aufweist.

10. Maschinenlesbarer Speicher nach Anspruch 7, wobei der wenigstens eine Codeabschnitt zum Speichern des Weiteren einen Code zum Vorspeichern des wenigstens einen Datenmusters in dem Speicher (312, 412) vor der Weckermittlung aufweist.

11. Maschinenlesbarer Speicher nach Anspruch 7, der des Weiteren einen Code aufweist, der das Angleichen wenigstens eines Teils des ankommenden Frames an wenigstens einen Teil des wenigstens einen in dem Speicher (312, 412) gespeicherten Datenmusters deaktiviert, um einen bestehenden Energiezustand aufrecht zu erhalten.

12. Maschinenlesbarer Speicher nach Anspruch 11, wobei der Code zum Deaktivieren von wenigstens einem eines Host Prozessors (320) und eines Kernprozessors (314) ausgeführt wird.

13. System zur Ermittlung von Weckpaketen zum Vernetzen bei Übertragungsraten in der Größenordnung von Gigabit Datenraten oder höher, wobei das System aufweist:
einen Speicher (312, 412) zum Speichern wenigstens eines Datenmusters;
wenigstens einen Angleicher, der so ausgelegt ist, dass er wenigstens einen Teil eines ankommenden Frames an wenigstens einen Teil des wenigstens einen in dem Speicher gespeicherten Datenmusters unmittelbar bei Empfang des ankommenden Frames angleicht; und
wenigstens einen Erzeuger, der so ausgelegt ist, dass er wenigstens ein Power Management Ereignis erzeugt, wenn das Angleichen dazu führt, dass der wenigstens eine Teil des ankommenden Frames dem wenigstens einen Teil des wenigstens einen in dem Speicher gespeicherten Datenmusters entspricht,
**dadurch gekennzeichnet, dass**
der wenigstens eine Angleicher des Weiteren aufweist:
einen Aktivierer zum Aktivieren eines Steuerungsworts, wobei das Steuerungswort wenigstens ein Byte in dem zu prüfenden ankommenden Frame anzeigt;
einen Offset-Ermittler zum Ermitteln eines Offset zu einer Stelle des wenigstens einen Datenmusters in dem Speicher; und
wenigstens einen Komparator zum Vergleichen wenigstens eines Teils des Datenmusters an dem Offset mit wenigstens einem Byte, das durch das Steuerungswort angegeben wird.

14. System nach Anspruch 13, wobei der wenigstens eine Erzeuger des Weiteren wenigstens einen Benachrichtiger aufweist, der so ausgelegt ist, dass er wenigstens einen Prozessor (412) über wenigstens ein erzeugtes Power Management Ereignis benachrichtigt.

15. System nach Anspruch 14, wobei der wenigstens eine Benachrichtiger des Weiteren den wenigstens einen Erzeuger aufweist, der so ausgelegt ist, dass er ein Unterbrechungssignal für wenigstens einen Host Prozessor (320) erzeugt.

16. System nach Anspruch 13, wobei der Speicher so vorkonfiguriert ist, dass er wenigstens ein Datenmuster in dem Speicher (312, 412) vor der Weckermittlung vorspeichert.

17. System nach Anspruch 13, das des Weiteren wenigstens einen Deaktivierer aufweist zum Deaktivieren des Angleichens wenigstens eines Teils des ankommenden Frames an wenigstens einen Teil des wenigstens einen in dem Speicher (312, 412) gespeicherten Datenmusters, um einen bestehenden Energiezustand aufrecht zu erhalten.

18. System nach Anspruch 17, wobei der Deaktivierer wenigstens einer eines Host Prozessors (320) und eines Kernprozessors (314) ist.

## Revendications

1. Procédé de détection de paquets de réveil pour l'interconnexion de réseaux à des débits de transmission de l'ordre de débits de données Gigabit ou supérieurs, le procédé comprenant les étapes consistant à :
stocker au moins un motif de données en mémoire (312, 412) ;
mettre en correspondance au moins une partie dudit au moins un motif de données stocké en mémoire (312, 412) avec au moins une partie d'une trame entrante dès la réception de ladite trame entrante ; et
générer au moins un événement de gestion d'énergie si ladite mise en correspondance a pour conséquence que ladite au moins une partie de ladite trame entrante correspond à ladite au moins une partie dudit au moins un motif de données stocké en mémoire (312, 412) ;
**caractérisé en ce que** ladite mise en correspondance comprend en outre les étapes consistant à :
activer un mot de commande, ledit mot de commande indiquant au moins un octet dans ladite trame entrante à inspecter ;
déterminer un décalage par rapport à un emplacement dudit au moins un motif de données en mémoire (312, 412) ; et
comparer au moins une partie dudit motif de données au dit décalage au dit au moins un octet indiqué par ledit mot de commande.

2. Procédé selon la revendication 1, dans lequel ladite génération comprend en outre l'étape consistant à notifier à au moins un processeur (412) ledit au moins un événement de gestion d'énergie généré.

3. Procédé selon la revendication 2, dans lequel ladite notification comprend en outre l'étape consistant à générer un signal d'interruption à au moins un processeur hôte (320).

4. Procédé selon la revendication 1, dans lequel ledit stockage comprend en outre l'étape consistant à pré-stocker ledit au moins un motif de données dans ladite mémoire (312, 412) avant la détection de réveil.

5. Procédé selon la revendication 1, comprenant en outre l'étape consistant à désactiver ladite mise en correspondance d'au moins une partie de ladite trame entrante avec au moins une partie dudit au moins un motif de données stocké en mémoire (312, 412) pour maintenir un état d'énergie existant.

6. Procédé selon la revendication 5, dans lequel ladite désactivation est exécutée par au moins l'un des processeurs parmi un processeur hôte (320) et un processeur « coeur » (314).

7. Stockage lisible par machine, sur lequel est stocké un programme informatique ayant au moins une section de code pour mettre en oeuvre un procédé de détection de paquets de réveil pour l'interconnexion de réseaux à des débits de transmission de l'ordre de débits de données Gigabit ou supérieurs, l'au moins une section de code étant exécutable par une machine qui l'amène à effectuer les étapes consistant à :
stocker au moins un motif en mémoire (312, 412) ;
mettre en correspondance au moins une partie d'une trame entrante avec au moins une partie dudit au moins un motif de données stocké en mémoire dès la réception de ladite trame entrante ; et
générer au moins un événement de gestion d'énergie si ladite mise en correspondance a pour conséquence que ladite au moins une partie de ladite trame entrante correspond à ladite au moins une partie dudit au moins un motif de données stocké en mémoire ;
**caractérisé en ce que** ledit au moins un code pour la mise en correspondance comprend en outre les étapes consistant à :
activer un mot de commande, ledit mot de commande indiquant au moins un octet dans ladite trame entrante à inspecter,
déterminer un décalage par rapport à un emplacement dudit au moins un motif de données en mémoire ; et
comparer au moins une partie dudit motif de données au dit décalage au dit au moins un octet indiqué par ledit mot de commande.

8. Stockage lisible par machine selon la revendication 7, dans lequel ladite au moins une section de code pour la génération comprend en outre un code pour notifier à au moins un processeur (412) ledit au moins un événement de gestion d'énergie généré.

9. Stockage lisible par machine selon la revendication 8, dans lequel ledit code de notification comprend en outre un code pour générer un signal d'interruption à au moins un processeur hôte (320).

10. Stockage lisible par machine selon la revendication 7, dans lequel ladite au moins une section de code de stockage comprend en outre un code pour pré-stocker ledit au moins un motif de données dans ladite mémoire (312, 412) avant la détection de réveil.

11. Stockage lisible par machine selon la revendication 7, comprenant en outre un code pour désactiver ladite mise en correspondance d'au moins une partie de ladite trame entrante avec au moins une partie dudit au moins un motif de données stocké en mémoire (312, 412) pour maintenir un état d'énergie existant.

12. Stockage lisible par machine selon la revendication 11, dans lequel ledit code de désactivation est exécuté par au moins l'un des processeurs parmi un processeur hôte (320) et un processeur « coeur » (314).

13. Système de détection de paquets de réveil pour l'interconnexion de réseaux à des débits de transmission de l'ordre de débits de données Gigabit ou supérieurs, le système comprenant :
une mémoire (312, 412) pour stocker au moins un motif de données ;
au moins un dispositif de mise en correspondance apte à mettre en correspondance au moins une partie d'une trame entrante avec au moins une partie dudit au moins un motif de données stocké en mémoire dès réception de ladite trame entrante ; et
au moins un générateur apte à générer au moins un événement de gestion d'énergie si ladite mise en correspondance a pour conséquence que ladite au moins une partie de ladite trame entrante correspond à ladite au moins une partie dudit au moins un motif de données stocké en mémoire ;
**caractérisé en ce que** ledit au moins un dispositif de mise en correspondance comprend en outre :
un activateur pour activer un mot de commande, ledit mot de commande indiquant au moins un octet dans ladite trame entrante à inspecter ;
un déterminateur de décalage pour déterminer un décalage par rapport à un emplacement dudit au moins un motif de données en mémoire ; et
au moins un comparateur pour comparer au moins une partie dudit motif de données au dit décalage au dit au moins un octet indiqué par ledit mot de commande.

14. Système selon la revendication 13, dans lequel ledit au moins un générateur comprend en outre au moins un notificateur apte à notifier à au moins un processeur (412) ledit au moins un événement de gestion d'énergie généré.

15. Système selon la revendication 14, dans lequel ledit au moins un notificateur comprend en outre au moins un générateur apte à générer un signal d'interruption à au moins un processeur hôte (320).

16. Système selon la revendication 13, dans lequel ladite mémoire est préconfigurée pour pré-stocker ledit au moins un motif de données dans ladite mémoire (312, 412) avant la détection de réveil.

17. Système selon la revendication 13, comprenant en outre au moins un désactivateur pour désactiver ladite mise en correspondance d'au moins une partie de ladite trame entrante avec au moins une partie dudit au moins un motif de données stocké en mémoire (312, 412) pour maintenir un état d'énergie existant.

18. Système selon la revendication 17, dans lequel ledit désactivateur est au moins l'un des processeurs parmi un processeur hôte (320) et un processeur « coeur » (314).
